# EUROPEAN PATENT APPLICATION

(11) **EP 1 111 541 A2**
(43) Date of publication of application: **27.06.2001**
(21) Application number: 00311297.6
(22) Date of filing: 18.12.2000
(51) Int. Cl.: G06N 5/02

(54) **Method and apparatus for the integration of data, information and knowledge**

(30) Priority: 20.12.1999 US 172608 P; 11.09.2000 US 659731
(71) Applicant: Xerox Corporation, Patent Department, Rochester, New York 14644 (US)
(72) Inventor: Swartz, Ronald M., Dresher, PA 19426 (US); Janos, Evelyn, West Chester, PA 19380 (US); Winkler, Jeffrey L., Collegeville, PA 19426 (US); Markidan, Igor, Cherry Hill, NJ 08003 (US); Dou, Qun, Noth Wales, PA 19454 (US)
(74) Representative: Skone James, Robert Edmund

(57) **Abstract**

The present invention is a method and apparatus for first integrating the operation of various independent software applications directed to the management of information within an enterprise. The system architecture is, however, an expandable architecture, with built-in knowledge integration features that facilitate the monitoring of information flow into, out of, and between the integrated information management applications so as to assimilate knowledge information and facilitate the control of such information. Also included are additional tools which, using the knowledge information enable the more efficient use of the knowledge within an enterprise, including the ability to develop a context for and visualization of such knowledge.

## Description

This invention relates generally to an architecture for the integration of data, information and knowledge, and more particularly to a method and apparatus that manages and utilizes a knowledge repository for the purpose of enabling easy access, manipulation and visualization of synchronized data, information and knowledge contained in different types of software systems.

Companies operating in regulated industries (e.g., aerospace, energy, healthcare, manufacturing, pharmaceuticals, telecommunications, utilities) are required to manage and review large amounts of information that is frequently generated over the course of several years. The principal components of this information are the structured numerical data and the unstructured textual documents. The data are collected and run through complex statistical analyses that are then interpreted and reported by industry experts to meet stringent requirements for regulatory review. Separate groups or organizations produce multiple iterations of these data and documents, with potentially thousands of statistical data analysis files linked to thousands of dependent documents. Often such groups have independently evolved specialized and often incompatible procedures and work practices. Correspondingly, separate software systems for data analysis and document management have been adopted as discrete solutions. The dichotomy existing in both the information sources and work groups jeopardizes the common goal. Hence, the challenge is to integrate and synchronize the flow of all information, processes and work practices necessary for making better and faster decisions within an enterprise.

Currently the process of integrating data and data analysis reports with regulatory documents can be characterized as (a) an entirely manual process (i.e., paper is copied and collated into a hard copy compilation), (b) a multi-step electronic process (i.e., files are placed into a central file location by one department and retrieved by another), or (c) an internally developed, custom solution that is used to automate portions of the process. Problems with such processes typically include:
- complexity and error prone nature of the systems needed to manage the process(es) (e.g., manual updates to related documents and data, demands for maintaining a "mental" mapping of these objects to each other (i.e., a meta information catalogue) and enforcing the integrity of the defined object "linkages" throughout the business process);
- difficulty in locating and working with interrelated documents and data throughout the information generation lifecycle (a lack of integrated textual and numerical information severely constrains enterprise information workflow and decision making);
- a lack of an efficient mechanism, in the current document management and data analysis systems, for locating and working with the many different types of information maintained in separate systems;
- a failure to recognize, appreciate and enable the dependencies between data and documents throughout the information generation lifecycle
   - a complex information workspace topology exists that is known only intrinsically by the users who must maintain the referential integrity of these related information objects; and
- inflexibility of a process, during the information generation lifecycle, to handle situations where data changes force a series of document changes, which may in turn require modifications of other documents.

On the other hand, the present invention will alleviate such problems using an architecture that includes a knowledge repository for the purpose of enabling easy access, manipulation and visualization of complete and synchronized information contained on a plurality of software platforms.

The following description characterizes an embodiment of the present invention in the context of a pharmaceutical approval process. The description is not intended to in any way limit the scope of the invention. Rather the pharmaceutical embodiment is intended to provide an exemplary implementation to facilitate an understanding of the advantages of the present invention in the context of a regulatory review process.

To further characterize the features of the present invention, consider a pharmaceutical research company that has initiated a large, international clinical study. The study protocol, that defines the conduct of the study (for a new chemical entity), was written by study clinicians (M.D.s). Four years and several millions of dollars later, the statistical analysis failed to support the argument for regulatory application approval. The irony is that the drug was known to be safe and effective. The failure was totally due to a faulty protocol design. This represents a significant monetary loss for the organization - one that might have been avoided with the appropriate knowledge base and tools. At the very least, it should be avoided in the future.

In the scenario presented, and in many regulated industry organizations, teams of experts for all groups 1-5 below made what they believed were appropriate choices at the time.

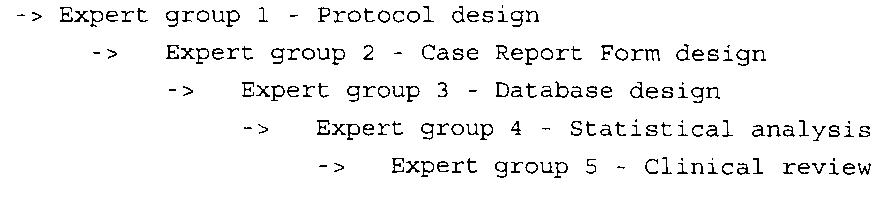

There was no "tool" in place to allow any of these teams to visualize and understand the chain of dependent decisions made by fellow group members or members of any of the other groups -- let alone the reasoning behind those decisions. As is often the case with regulatory processes, when the statistical analyses were performed, the original teams were not only no longer intact, but there were no representatives left in the company. While preparation of the final submission may uncover errors -- why the analysis wasn't working (e.g., missing collection of correct data points), however, the errors are not communicated to the entire set of expert groups since the project was terminated and people were not motivated to dwell on the experience.

Some key advantages of the present invention are the saving of "context" and having ability to visualize and explore past, present and potential decisions, infrastructure setup for individual and enterprise learning, structuring processes, practices, and applications and the interactions between them, that to date has been mostly unstructured and unrecorded. The lessons learned from the scenario described above would suggest there are at least three levels of value in pursuing implementation of a system to solve this type of problem:
1. ABILITY TO AVOID COMPLETELY: If an appropriate tool had been in place whereby the original team would have had the opportunity to "see" or visualize the structure of the work they were planning, including dependencies of various information sources, decision points, etc.
2. ABILITY TO RECOGNIZE EARLY: At the very least if the team had been able to relate the choices they made in the early stages, then there would be at least some chance the teams would have identified problems early on and had the option to correct them.
3. ABILITY TO REFLECT ON PAST: In the worst case, the company loses its monetary investment but at least they would have a well documented case of what not to do. This ultimately could save multiple projects time and money in the future. The next protocols they designed would be less apt to have the same or similar problems; they are building on their experience.

As noted in the scenario described above, companies operating in regulated industries are required to manage and review large amounts of information, frequently information for which generation and analysis occurs over the course of several years. The major components of this information are the structured, numerical data and the unstructured textual documents. The data are collected and put through complex statistical analyses which are interpreted and reported as analytical data by industry experts to meet stringent government requirements for regulatory application and approval. In a typical organization, several disparate groups produce multiple iterations of these data and documents, with thousands of statistical data analysis files linked to thousands of dependent documents. Often, the groups have independently evolved specialized and incompatible procedures and work practices. Correspondingly, separate software systems for data analysis and document management were adopted as discrete solutions. The dichotomy existing in both the information sources and work groups jeopardizes the common goal of regulatory approval.

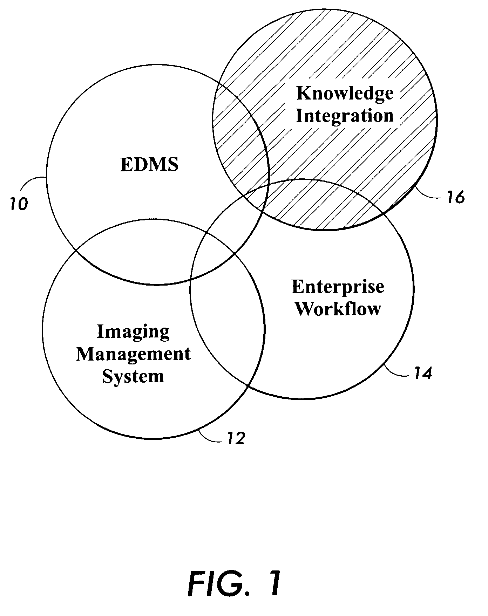

To facilitate the integration and synchronization of all information, processes and work practices necessary for making better and faster decisions in the enterprise, aspects of the present invention are embodied in a common architecture. In a simplified representation, the knowledge of an enterprise may be represented in a document life cycle diagram such as that depicted in Figure 1. For example, the enterprise document management system (EDMS) 10, the imaging management system 12 and the enterprise workflow system 14 are portions of an knowledge management system that are currently available as stand-alone systems. For example, Documentum™ and PC Docs™ provide document management systems, FileNet® has described imaging management and enterprise workflow solutions, and InConcert® workflow management software. In one preferred embodiment of the present invention, the system employed by the enterprise would not only enable portions 10, 12 and 14 of the enterprise-wide system to be integrated, but would further include the functionality represented by the knowledge integration portion 16.

FileNet's "Foundation for Enterprise Document Management Strategy White Paper", September 1997, suggests a major industry trend that is being generated by users: the convergence of workflow, document-imaging, electronic document management, and computer output to laser disk into a family of products that work in a common desktop PC environment. FileNet's foundation is a base upon which companies can easily build an enterprise-wide environment to access and manage all documents and the business processes which utilize them. FileNet's architectural model is based on the client/server computing paradigm. Four types of generic client applications are described, the four main elements include:
*Searching -* the ability to initiate and retrieve information that "indexes" documents across the enterprise by accessing industry standard databases and presenting the results in an easy to use and read format.
*Viewing -* the ability to view all document types and work with them in the most appropriate way, including viewing, playing (video or voice), modifying/editing, annotating, zooming, panning, scrolling, highlighting, etc.
*Development tools* - industry-standard based development tool sets (e.g. Active X, PowerBuilder) that allow customers or their selected application development or integration partners to create specific applications that interface with other applications already existing in the organization.
*Administrative applications -* applications that deliver management and administrative information to users, developers, or system administrators that allow them to optimize tasks, complete business processes or receive data on document properties and functions.

In the example of a regulated industry (e.g., pharmaceuticals), the primary problem is generally viewed as how to synthesize all the information to prove a regulatory application case as quickly as possible while not losing the context. Automating and synchronizing the flow of all information helps expedite the review process. But the bigger challenge is to preserve the context necessary for applying knowledge. A system is needed that enables users to put their knowledge to work; to answer such questions as: Are the documents consistent with the data? Were iterations of the data and documents synchronized? What was done to preserve the integrity of the data? Who performed the work and what were their qualifications? Appropriate answers to these questions will influence reviewer/regulator confidence in the data and assertions; yet in current systems, the information gets buried, lost or is never recorded. The present invention is directed to a system, architecture and associated processes that may be used to identify, confirm, integrate and enable others to follow the "path" that was used in meeting the regulatory approval requirements.

In accordance with the present invention, there is provided a knowledge integration system for providing application interoperability and synchronization between heterogeneous document and data sources, comprising: a data source module suitable for independently performing data analysis operations using data stored within at least one database to generate data and analysis results; a document source module, including a document database memory, for capturing knowledge and storing the knowledge in the form of documents, validating the accuracy of the knowledge, and making the captured knowledge available across a network; and a knowledge integration module as part of a client/server system having access to the data source module and the document source module, for managing the flow of information between the data source and document source modules, thereby enabling the integration of data and analysis results with documents and further providing links between the data and analysis results and the documents to automatically update the documents given changes in data or analysis results.

In accordance with yet another aspect of the present invention, there is provided a method for providing application interoperability and synchronization between heterogeneous document and data sources, comprising the steps of: accessing data stored in at least one database; performing data analysis operations using the data stored in at least one database to generate data and analysis results; independently storing knowledge, in the form of documents, in a document database, including validating the accuracy of the knowledge and making the captured knowledge available across a network; and managing the flow of information between at least one database and the document database to enable the integration of the data and analysis results with the documents and to automatically update the documents upon the occurrence of a change in the data or analysis results.

In accordance with yet another aspect of the present invention, there is provided a knowledge integration system, comprising: an application integration module for providing application interoperability and synchronization between heterogeneous document and data sources; and a knowledge integration module for facilitating archiving of knowledge-related context and providing the ability to access and assess past, present and potential decisions, infrastructural setup, structuring processes, and practices.

In accordance with yet another aspect of the present invention, there is provided a knowledge integration system for providing application interoperability and synchronization between heterogeneous document and data sources, comprising: a computer programmed to utilize knowledge integration middleware in conjunction with traditional application integration middleware to build and manage an integration knowledge repository; a mean for bridging structured and unstructured data with uniform access to information; integrated knowledge-based software applications that collectively enable information integration with knowledge linkage, visualization and utilization of structured, unstructured and work practice data and metadata produced by knowledge workers in an enterprise; and a knowledge repository containing record of integration transactions, context information from users and applications, information metadata catalog, knowledge access control, application activation rules, metadata and rules for knowledge integration, knowledge generation, knowledge visualization, "live" knowledge links, task execution, and case-based data for regulatory review.

In accordance with yet another aspect of the present invention, there is provided a method of providing application interoperability and synchronization between heterogeneous document and data sources such as those currently managed by disparate enterprise document management and data analysis systems, comprising: establishing and utilizing "live" links between an enterprise document management system, statistical database and applications; enabling users to define and execute multiple tasks to be performed by one or more applications from anywhere within a document where the flow of textual and numerical analysis information are systematically synchronized; and automating the process of transferring data analysis reports to a document management system for document production, synchronize information flow between data and documents, and provide linkages back to data analysis software.

In accordance with yet another aspect of the present invention, there is provided a knowledge management and integration system, comprising: a knowledge integration module for facilitating archiving of knowledge-related context related to documents and providing the ability to access and assess past, present and potential decisions, infrastructural setup, structuring processes, and practices; an application integration module for providing application interoperability and synchronization between heterogeneous document and data sources; and knowledge integration middleware for bridging structured and unstructured data, information and knowledge between said knowledge integration module and said application integration module.

In accordance with yet another aspect of the present invention, there is provided a document submission process control and tracking system for providing end-to-end control and tracking of documents from creation to final review, and which integrates with existing data analysis tools, authoring tools and document management systems, comprising: a database; means for capturing all process audit trail information in said database; means for providing visualization of said audit trail information, and said process; means for enabling definition and maintenance of an overall proof plan; and means for automating construction of the submission document from said final proof plan.

In accordance with yet another aspect of the present invention, there is provided a knowledge integration and management system, comprising: a document repository for mediating data transfers between document authoring and document analysis modules; a data analysis module comprising components for statistical data analysis and for pushing data analysis results to said document repository; a document authoring module comprising components for document authoring, storage and retrieval, and for pulling data analysis results into said document repository; and a process administration module comprising client components for creating and maintaining a proof plan, configuring a data analysis database and a process administration module comprising client components for creating and maintaining a proof plan, configuring a data analysis database and said document repository, and visualizing process status and audit trail information.

The present invention represents an architecture, embodied for example in a software product suite, that manages and utilizes a knowledge repository, via knowledge integration middleware (KIMW), for the purpose of enabling easy access, manipulation and visualization of complete and synchronized information contained in different software systems. Aspects of the present invention include:
- the use of knowledge integration middleware in conjunction with traditional application integration middleware to build and manage an integration knowledge repository;
- providing a generic mechanism for bridging structured and unstructured data with uniform access to information;
- the specification of four integrated knowledge-based software applications (described below) that collectively enable information integration with knowledge linkage, visualization and utilization of structured, unstructured and work practice data and metadata produced by knowledge workers in an enterprise;
- use of a knowledge repository containing record of integration transactions, context information from users and applications, information metadata catalog, knowledge access control, application activation rules, metadata and rules for knowledge integration, knowledge generation, knowledge visualization, "live" knowledge links, task execution, and case-based data for regulatory review;
- use of a three dimensional (3D) interface in conjunction with a user-specific conceptual schema providing access to enterprise information wherever it is stored and managed; and
- implementation of a rule-based paradigm for filing marketing applications to regulatory agencies that uses hypothesis/proof/assertion structures.

The present invention will provide application interoperability and synchronization between heterogeneous document and data sources such as those currently managed by disparate enterprise document management and data analysis systems. Initially, the invention will allow users to establish and utilize "live" links between an enterprise document management system and a statistical database. Alternative or improved embodiments of the invention will enable users to define and execute multiple tasks to be performed by one or more applications from anywhere within a document.

Users of knowledge management systems desire an integrated and flexible process for providing Integrated Document Management, Image Management, WorkFlow Management and Information Retrieval. Aspects of the present invention focus on the added insight that a majority of the same customers want their data integrated in this document lifecycle platform as well as where the flow of textual and numerical analysis information are systematically synchronized. Such a system will enable decision makers to have complete information.

One aspect of the invention is based on the discovery that data on the use of documents stored in an enterprise document management system (EDMS) provides insight into the flow of knowledge within the enterprise. This discovery avoids problems that arise in conventional document or knowledge management systems, where the flow of information must be rigorously characterized before or at the time the document is stored into the EDMS.

Another aspect of the present invention is based on the discovery of techniques that can automate the process of transferring data analysis reports to a document management system for regulatory document production, synchronize information flow between data and documents, and provide linkages back to data analysis software. Yet another aspect of the invention embeds and executes "live" knowledge links stored in documents and associated analysis data - allowing users to define and execute multiple tasks to be performed by one or more data or document applications within the information content. Another aspect of the present invention visualizes objects and linkages maintained in the integration knowledge base, preferably using a 3D interface and conceptual schema for access and manipulation of the enterprise information. A final aspect of the present invention generates knowledge documents that are employed to manage a regulatory marketing application process.

The techniques described herein are advantageous because they are flexible and can be adapted to any of a number of knowledge integration needs. Although described herein with respect to preparation of regulatory agency submissions, the present invention has potential use in any enterprise seeking to understand and utilize the information acquired by the enterprise as knowledge. The techniques of the invention are advantageous because they permit the efficient establishment and use of a knowledge repository. Some of the techniques can be used for bridging structured and unstructured data. Other techniques provide for information integration with knowledge linkage, visualization and utilization of structured, unstructured and work practice data and metadata produced by knowledge workers in an enterprise. As a result of the invention, users of the method and apparatus described herein will be able to accurately understand the who, why, when, where and how questions pertaining to information and document use within an enterprise.

Some examples of systems according to the invention will now be described with reference to the accompanying drawings, in which: -
Figure 1 is a general representation of various components that comprise a knowledge integration system;
Figures 2 and 3 depict block diagrams illustrating embodiments of a system architecture;
Figures 4 and 5 depict block diagrams representing those components of an embodiment of the present invention;
Figure 6 is a detailed representation of the components necessary to implement a fully functional embodiment of the present invention;
Figure 7 is a depiction of the general architecture of a knowledge integration system in accordance with aspects of the present invention;
Figure 8 is a representation of the hierarchical levels of software in one embodiment of the knowledge integration system depicted in Figure 7; and
Figures 9-20 are illustrative representations of user interface screens depicting aspects of the present invention.

### 1. Definitions

Knowledge, in an organizational or enterprise sense, reflects the collective learning of the individuals and systems employed by the organization. As used herein, the term **"knowledge"** reflects that portion of the organizational know-how that may be reflected, recorded or characterized in a digital electronic format. A **"knowledge repository"** is any physical or virtual, centralized or decentralized system suitable for the receipt or recording of the knowledge of any portion of the enterprise.

As used herein, the term **"knowledge integration middleware"** represents any software used to assist in the integration of disparate information sources and their corresponding applications for the purposes of recording, distributing, and activating knowledge, knowledge applications, or knowledge services. More specifically, knowledge integration middleware is preferably employed to identify (including tracking, monitoring, analyzing) the context in which information is employed so as to enable the use of such context in the management of knowledge.

**"Document management"** refers to processes, and apparatus on which such processes run, that manage and provide administrative information to users, that allow them to optimize tasks, complete business processes or receive data on document properties and functions. The phrase **"Integrated Document Management"** refers to a process or system capable of performing document management using multiple independent software applications, each optimized to perform one or more specific operations, and to the process by which information may flow from one application to be incorporated or cause an action within one or more of the other document management processes. An **"enterprise document management system"** is a document management system implemented so as to capture and manage a significant portion, if not all, of the documents employed within an enterprise.

**"Image Management"** is a technology to specifically manage image documents throughout their lifecycle; an image management system typically utilizes a combination of advanced image processing and pattern recognition technologies to provide sophisticated information retrieval and analysis capabilities specific to images.

**"WorkFlow Management"** is a technology to manage and automate business processes. Workflow is used to describe a defined series of tasks, within an organization, that are used to produce a final outcome.

**"Information Retrieval"** is a technology to search and retrieve information from various information sources; the term generally refers to algorithms, software, and hardware that deal with organizing, preserving, and accessing information that is primarily textual in nature.

A **"regulatory agency"** is any organization or entity having regulatory control or authorization over a particular industry, market, product or service. Examples of industries subject to review by a regulatory agency include aerospace, energy, healthcare, manufacturing, pharmaceuticals, telecommunications, and utilities.

**"Data"** refers to distinct pieces of information; **"analytical data"** refers to the numerical information created during the statistical analysis of data. **"Metadata"** refers to data about data; as used herein, Metadata characterizes how, when and by whom a particular set of data was collected, and how the data is formatted. **"Information"** means data that has been analyzed, processed or otherwise arranged into meaningful patterns, whereas "knowledge" means information that can or has been put into productive use or made actionable.

**"Live"** as used in the phrase "enabling live links" between objects in data analysis and document management systems, means enabling seamless control and functionality between different applications managing such objects.

### 2. Summary

The invention is referred to as "KnowledgePath" throughout this disclosure. In one application of the invention is provided an overall "Submission Process Control and Tracking System" which provides end-to-end control and tracking of the submission process used by regulated industries to win product release authorization from the Government. KnowledgePath™ software integrates with existing Data Analysis Tools, Authoring Tools and Document Management Systems. The KnowledgePath system concept applies beyond the Pharmaceutical Industry segment, to any regulated industry segment which needs to submit complex documents based on extensive data analysis. These segments include Healthcare, Energy, Financial Services, Manufacturing and Telecommunications.

### 3. Overall System implementation

When a company in a regulated industry intends to release a new product or modify a rate schedule, the company must obtain approval from a government agency via the submission of a large complex document and a set of related reference data. This document presents the proof that, based on extensive data collection and analysis, the product meets the applicable regulations. The agency will use the document and associated data to review the evidence supporting the proof, and may choose to challenge any step in producing the evidence.

The end-to-end process leading to the submission document is often quite complex:
- the plan for constructing and documenting the proof must be developed.
- as data is collected and analysis is performed, the overall status against the plan must be understood,
- based on this status, the plan may need to be adjusted,
- the plan execution must be closely tracked, and an audit trail of activities must be maintained,
- the submission document must be constructed to present both the proof, and the supporting audit trail.

Today, the major tools used in the submission process are statistical data analysis software (e.g. SAS® packages), authoring tools (e.g. Microsoft Word®) and document management systems (e.g. Documentum®). Data Analysis software supports collecting, structuring, analyzing and presenting the data, summarizing the results and also capturing the audit trail of analysis steps and dependencies. A document management system stores the authored document fragments, their structuring as compound documents, and also captures the audit trail of document versions, configurations and release conditions.

While data analysis software and document management systems are very useful for piece parts of the submission process, they fall very short of end-to-end control and tracking of the submission process as a whole. In particular these tools alone are deficient in that they do not:
- capture and maintain audit trail dependencies between data analysis results in the data analysis software and document components in the document management software,
- integrate the end-to-end process state across the data analysis state and document construction state,
- allow easy visualization/understanding of the overall state of the process, or
- help to structure, and control creation of, the submission document in line with the proof plan.

The KnowledgePath is an overall "Submission Process Control and Tracking System" which provides end-to-end control and tracking of the submission process, and which integrates with existing data analysis tools, Authoring Tools and Document Management Systems. The added value of the KnowledgePath is to:
- capture all process audit trail information in one database,
- provide visualization tools for this audit trail information, and the overall process state,
- enable definition and maintenance of an overall proof plan, and
- more fully automate construction of the submission document from the final proof plan.

### 4. System Architecture

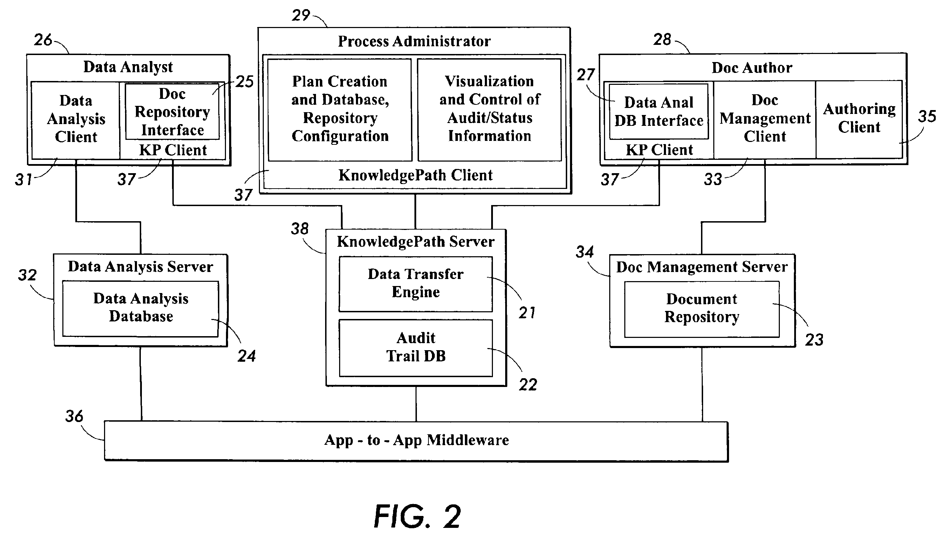

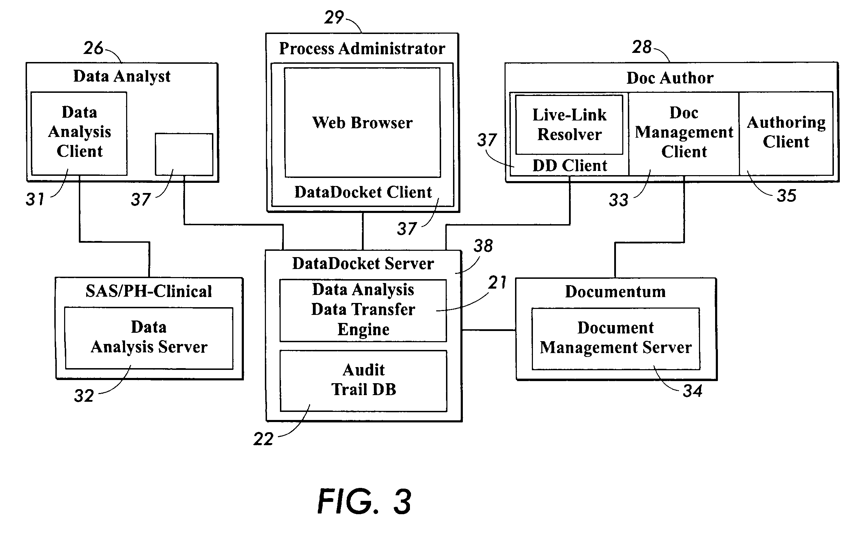

Block diagrams illustrating embodiments of a system architecture in accordance with the present invention are shown in Figures 2 and 3. The KnowledgePath user-oriented technical architecture is illustrated in Figure 2. The architecture is an integration of components from five software categories:
- Data Analysis Client/Server (Client 31/Server 32),
- Document Management Client/Server (Client 33/Server 34),
- Document Authoring Client 35,
- Application-to-application Middleware 36,
- KnowledgePath Clients/Server (Clients 37/Server 38).

These components are integrated to support three types of user: Data Analyst 26, Document Author 28, and Process Administrator 29.
- The Data Analyst 26 has client components for statistical data analysis (client 31), and for **pushing** data analysis results (using interface 25) across to the document repository 23. This latter component is provided by KnowledgePath so that it can mediate data transfers between the data analysis side 26 and the document management side 28.
- The Document Author 28 has client components for authoring (client 35), for document storage and retrieval (client 33), and for **pulling** data analysis results (using interface 27) across to the document repository 23. This latter component is provided by KnowledgePath so that it can mediate these data transfers.
- The Process Administrator 29 has client components for creating/maintaining a proof plan, for configuring the data analysis database and document repository accordingly, and also for visualizing the process status and audit trail information.

Client components may be integrated via ActiveX, or WebBrowser technology, to provide seamless user interfaces for each of the three user types.

The KnowledgePath Server contains the following components:
- An engine 21 for transferring data between client and server, and also between server and server. This engine is rules based so that it can be easily reconfigured for a new submission process. Data transfers include both data analysis results (client-server) and also audit trail data (server-server). Each data transfer will itself be recorded as a new item in the audit trail.
- A database 22 for (logically) integrating all audit trail information regardless of whether the data was originally captured by KnowledgePath (data analysis to document repository transfers), the Data Analysis Server (data analysis result dependencies), or the Document Management Server (document component dependencies). This database captures who did what to each data analysis or document component, when and why. This database provides the information needed to understand the "evidence" chain, and to understand the status of the submission process against plan.

All client-initiated data analysis transfers between the Data Analysis side 26 and the Document Management side 28 use KnowledgePath as an intermediary so that the necessary audit trail information can be recorded. In addition, all audit trail information on the Data Analysis and Document Management Servers is logically replicated on the KnowledgePath Server, following rules captured in the Transfer Engine rule base. All server-initiated data and event transfers between the three servers occur via application-to-application middleware. This enables KnowledgePath to hold all available audit trail information regardless of where it was originally captured.

Client-initiated data analysis transfers may either physically copy data analysis results into the document repository, or alternatively, provide a live-link back to the data analysis database. KnowledgePath resolves the live-links on demand and records any associated audit trail information. When a Document Author 28 opens a live-link in a (compound) document stored in the repository 23, KnowledgePath will use the Data Analysis Database Interface 27 to retrieve the appropriate data analysis result from data analysis database 24 and to open it under a document viewer on the user's client.

A complex submission process may involve contributions from several different enterprises, and there may be multiple instances from multiple vendors of both data analysis and document management software in the distributed submission process environment. KnowledgePath must ultimately operate in a distributed heterogeneous environment.

The user-oriented technical architecture for an embodiment for a DataDocket implementation is illustrated in Figure 3. The architecture is an integration using SAS/PH-Clinical for the data analysis application and Documentum as the document management Client/Server application.

### 5. Viability/Extensibility of the Architecture

The architecture can be extended from software which is tied to SAS/PH-Clinical and Documentum, to software which:
- can work with a variety of statistical analysis tools, and document management systems,
- provides additional features for submission process control and tracking.

The KnowledgePath system concept applies beyond the Pharmaceutical Industry segment, to any regulated industry segment which needs to submit complex documents based on extensive data analysis. These segments include Healthcare, Energy, Financial Services, Manufacturing and Telecommunications. The system concept may apply outside the regulated industries to any industry which performs pre-release product effectivity analysis and reporting for internal purposes (as opposed to government agency purposes).

KnowledgePath is valuable when there are complex and dynamically changeable dependencies between data and documents and both are contributing to an overall information state, and particularly when this overall state needs to be visualized and tracked. There are other useful paradigms for interoperating a database system and a document management system. A common one in large enterprises is to dynamically create business documents from data in a database, and to archive copies of the resulting documents in a repository. In this case, the documents are merely a view of "data prepared for human consumption" and the dependency between data and document is both simple and static. In this latter situation, the KnowledgePath capabilities are not required.

### 6. DataDocket

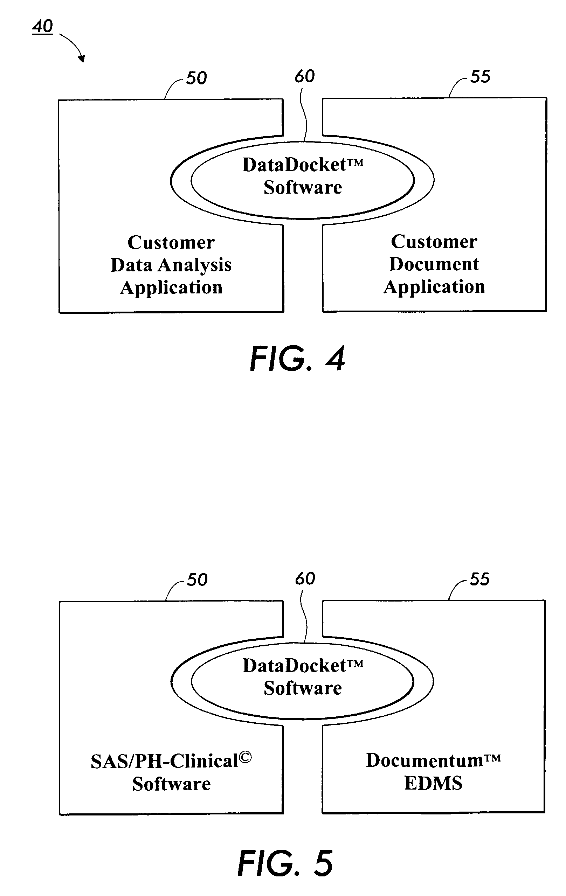

In one preferred embodiment, the present invention would be implemented in one or more phases of complexity, each building on the functionality of the prior by adding more value and addressing a more complex facet of the knowledge integration problem. At a first or basic level, the DataDocket phase automates the process of transferring data analysis reports to a document management system for document production (e.g., regulatory approval submission), synchronizes information flow between a data repository and document repository (and respective documents therein), and provides linkages from the documents back to the data analysis software. Such a system also preferably captures metadata associated with the information shared, stored and accessed by the users of the data so as to characterize the "context" in which the information is being used. As depicted, for example in Figures 4 and 5, the customer data analysis software application (e.g., SAS/PH-Clinical) 50 is separate and distinct from the enterprise document management system (e.g., Documentum or PC Docs) 55. There is no mechanism for communication of information between the two applications. In a simplified form, the communication may be implemented in a point-to-point system 60, where customized software is designed to provide for the transfer and incorporation of data from the database/analysis application 50 to the documents stored in the document repository software 55. Such a system is, however, of little value beyond solving the problem of communicating from one software application to another.

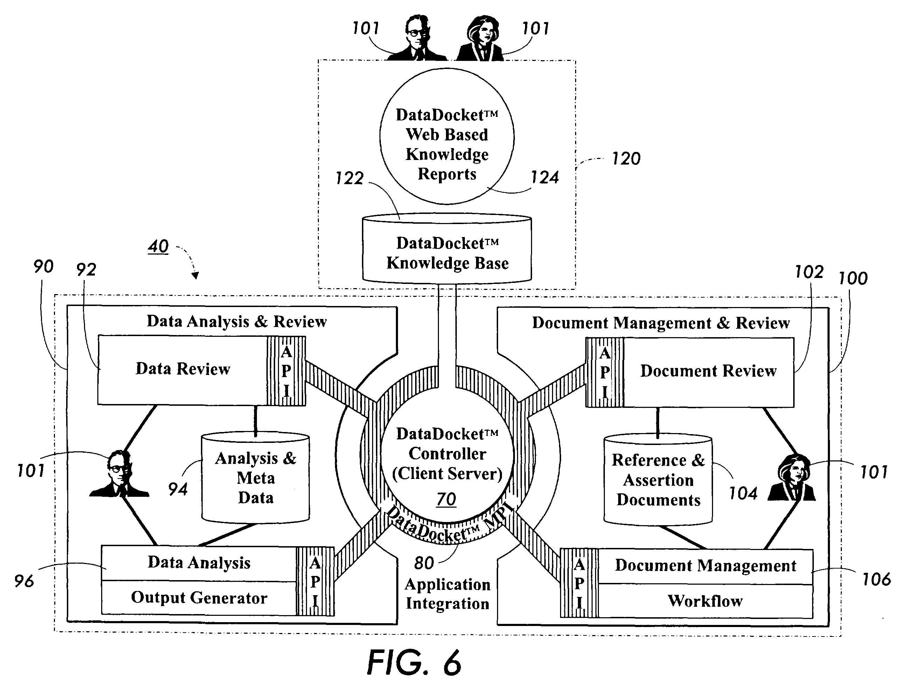

The preferred DataDocket architecture, depicted in Figures 4 or 5, is characterized by "middleware" 60 that manages the flow of information between two or more applications that comprise the information system of an enterprise. The software is preferably implemented as object oriented code (e.g., Visual C++ code) and may employ prototyped modules generated in Visual Basic. The software will run on a client server system (e.g., Windows NT) as depicted in Figure 6 to provide web-based operability and users will operate PC client systems having Windows NT/95 operating system software. The functionality of the DataDocket phase includes:
(a) the integration of independent data analysis and document management software applications;
(b) menu-based selection or batch processing of commands;
(c) generation of an audit trail to represent the flow of data;
(d) versioning of analysis data;
(e) enabling linkage between data analysis software and EDMS;
(f) updating a knowledge base which stores dynamic information about integration transactions;
(g) enabling "live" links between objects in data analysis and document management systems;
(h) using stored context information, provides access to historical information about how a report was created, who did the work, and when it was completed; and
   (I) triggering workflow events as part of an integration transaction (e.g., email notification, rendition generation request, etc.).

Advantages derivable from the DataDocket phase include: improved information integration processes and practices; a reduction of the error rate typically encountered with manual processes; and an assurance of the quality of the work processes and practices - enabling better, faster business decisions, and easier access to both text and numerical information sources from a user's desktop.

The DataDocket architecture is depicted in more detail in Figure 6, where the software components necessary to enable the functionality noted above are represented. In particular, the architecture is comprised of a series of interrelated software components. At the center of the architecture is the DD-Controller component 70 consisting of Client and Server subcomponents (DD-Client and DD-Server). The DataDocket Controller component controls communications and operations of all DataDocket components. It consists of a multi-threaded server with concurrently operating client software, DD-Server and DD-Client respectively. Design features/objects preferably will include: Maitre d-, Database Communicator, Workhorse, Client, Logger, Administrator, Socket Communicator, JobQueue, ClientMailer, Auditor, Job/Object Status, Transaction Feedback, synchronous/ asynchronous operation modes, versioning, etc., the source code for which may be found in the attached Source Code Appendix.

For the client/server component 70 to interface with the various independent applications that may be linked by DataDocket, the system preferably employs a DataDocket application programming interface (API) 80. API 80 is responsible for communications external to the DD-Controller, enabling the integration between independent software applications (e.g., data analysis software and document management software).

As illustrated in Figure 6 data analysis and review block 90 includes a data review subcomponent 92 having access to the analysis results & meta data stored in database 94, and providing access to such information to the user 101. The analysis results, and output thereof, are provided by subcomponent 96, which processes the meta data stored in the database at the direction of the user. API 80 is employed as the means by which the data review, data analysis and output generation is initiated and controlled by the DD-Controller 70.

Similarly, the document management and review block 100 preferably contains a document review subcomponent 102, that enables a user 101 to review reference and assertion documents stored in the document database 104. The document management and workflow subcomponent 106 also interfaces to the document database 104 at the behest of the user to create, manage or update the documents. As with the data analysis and review functionality, the interface between the subcomponents of the document management and review block 100 and DD-Controller 70 are accomplished via API 80. Having described the general operation of the various components in the basic DataDocket embodiment, attention is now turned to characterizing the subcomponents in more detail.

The client subcomponent of DD-Controller 70 will operate concurrently with the DD-Server. The client subcomponent is characterized by the following pseudocode:

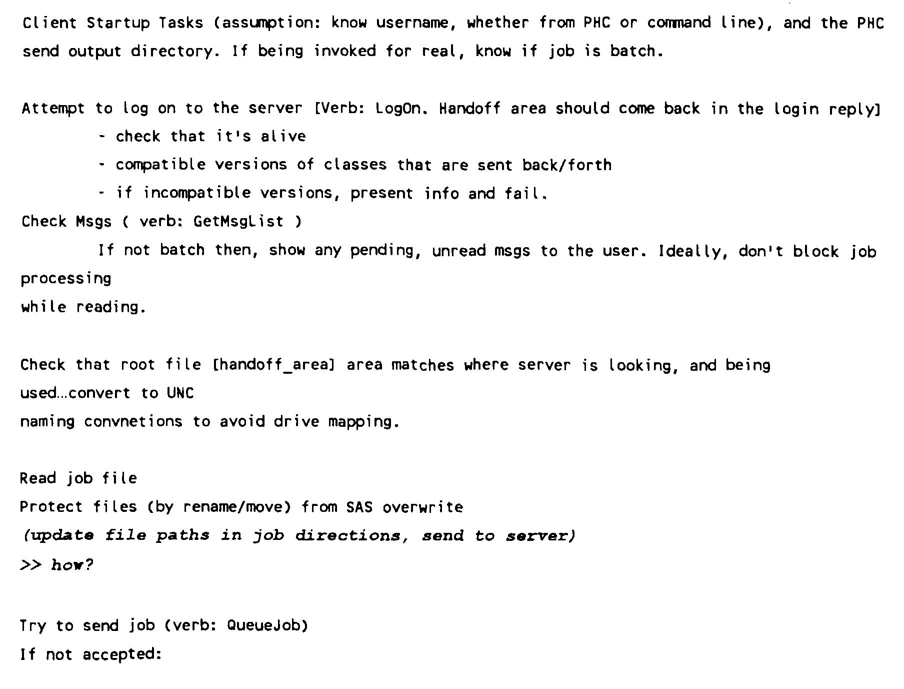

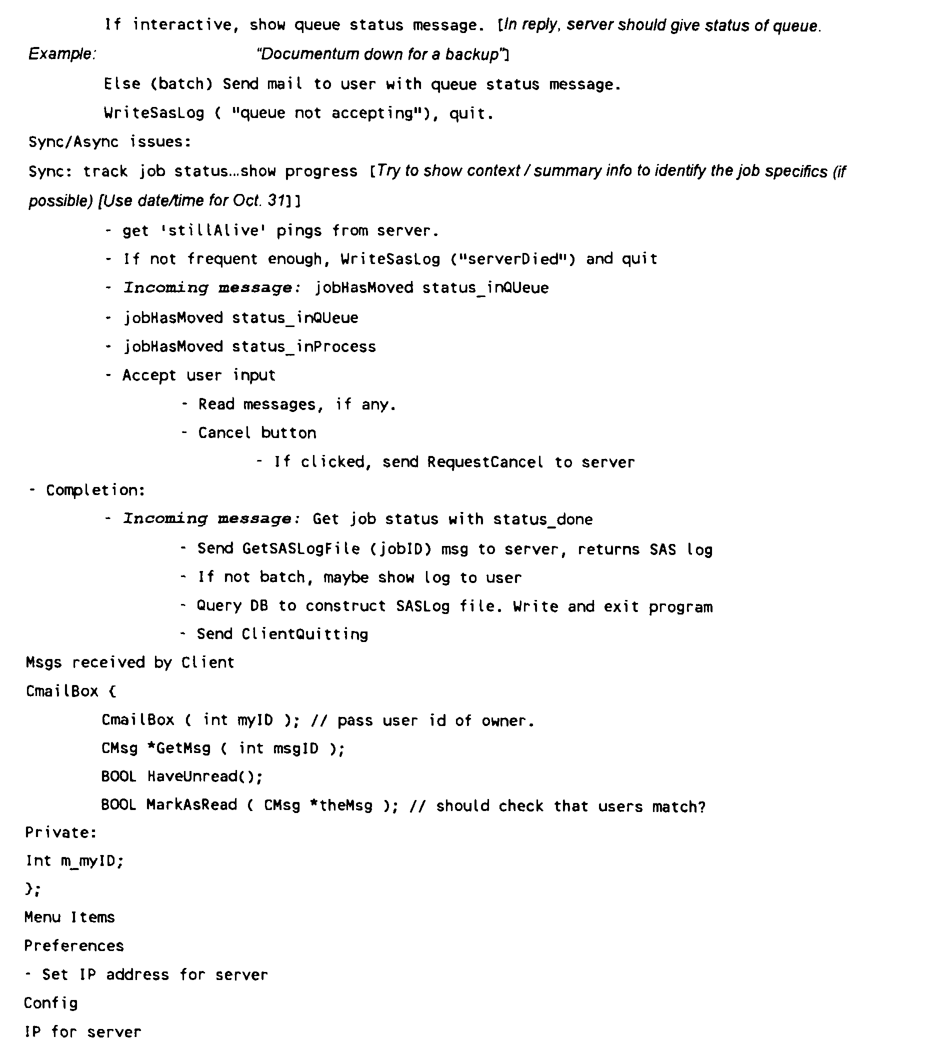

Similarly, the server subcomponent of DD-Controller 70 operates in accordance with the following pseudocode, and preferably includes the Admin, Workhorse, Maitre d-functionality that is characterized in the attached Source Code Appendix:

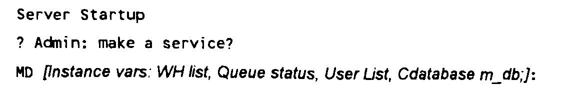

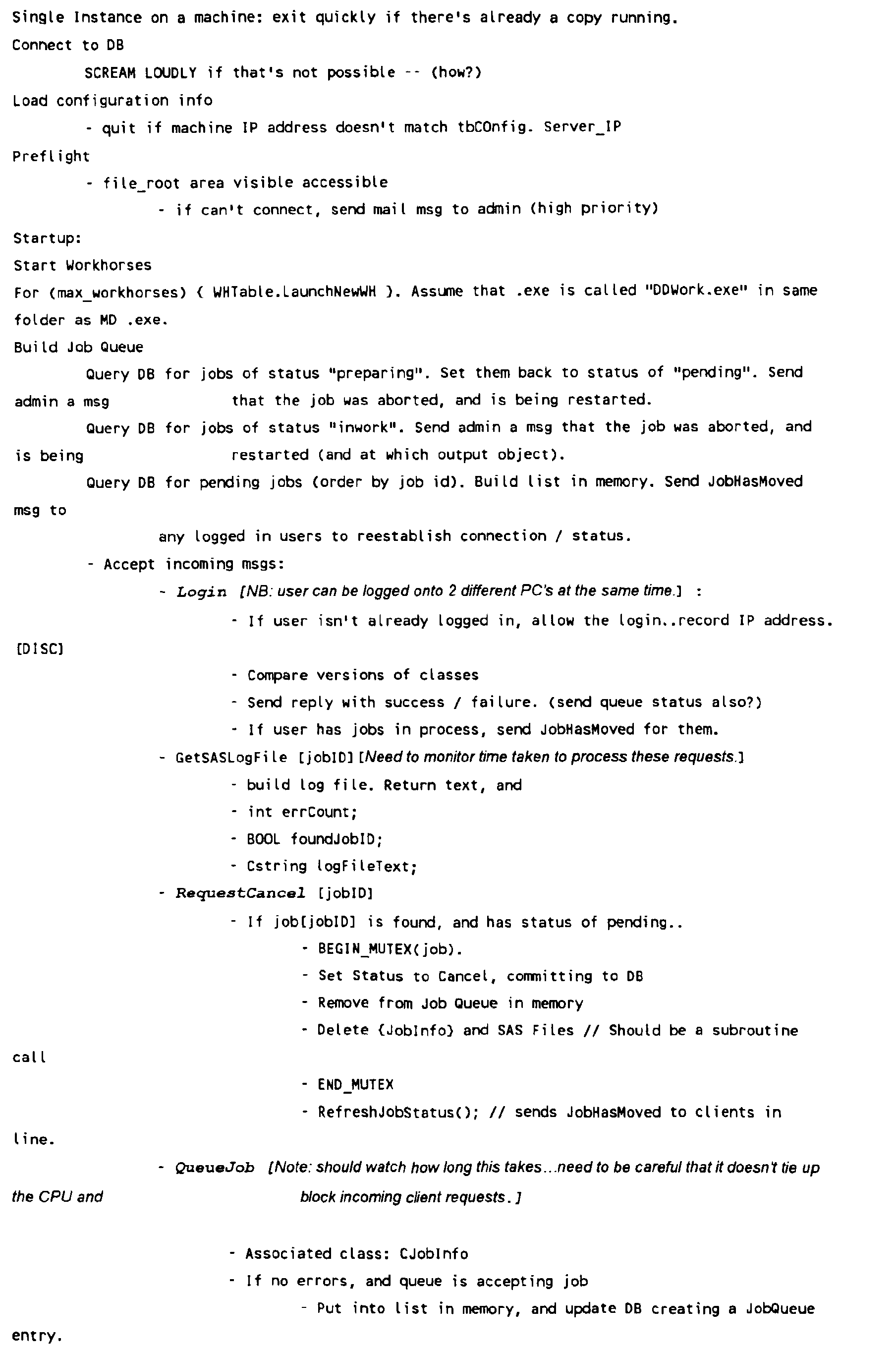

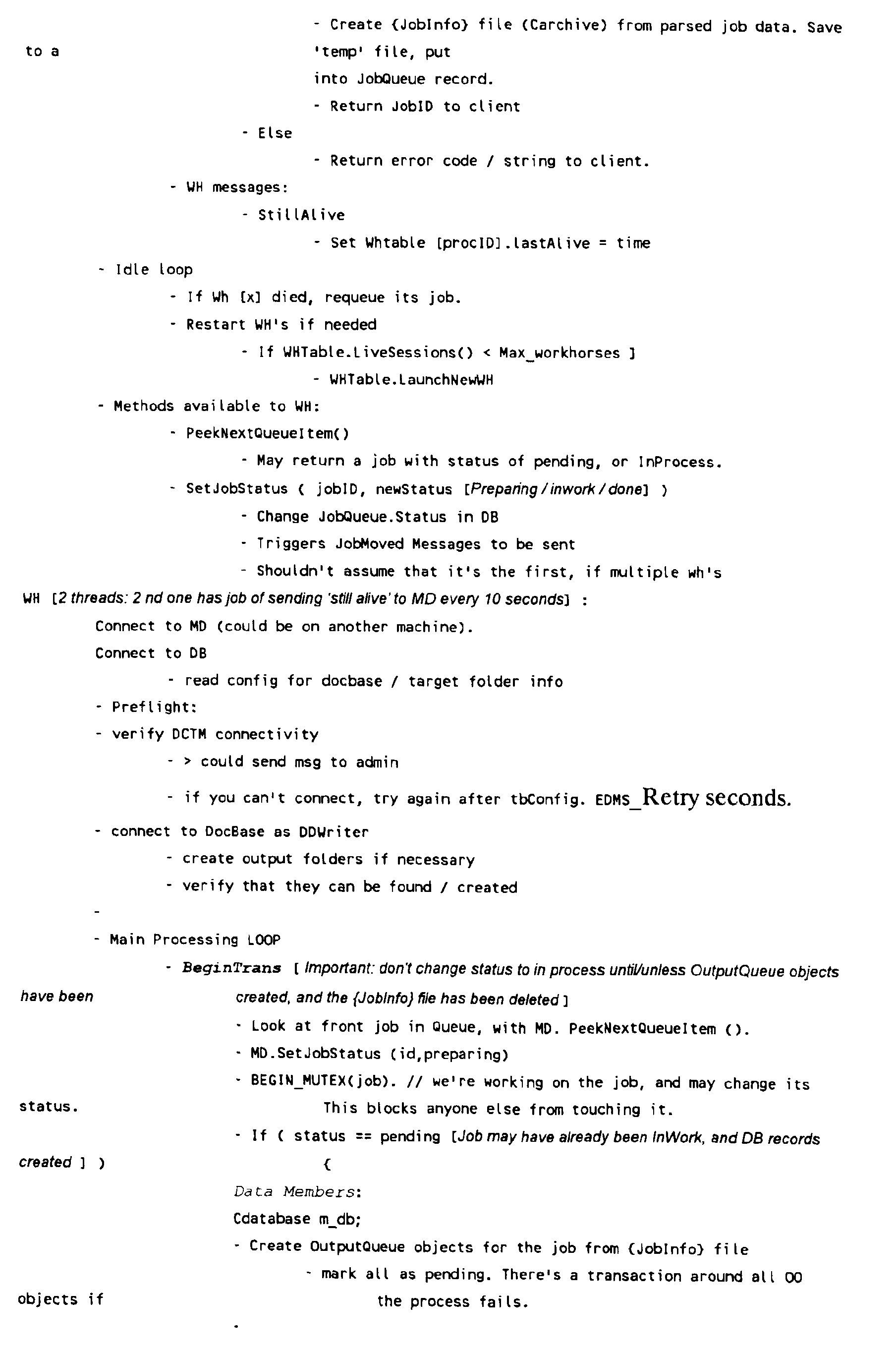

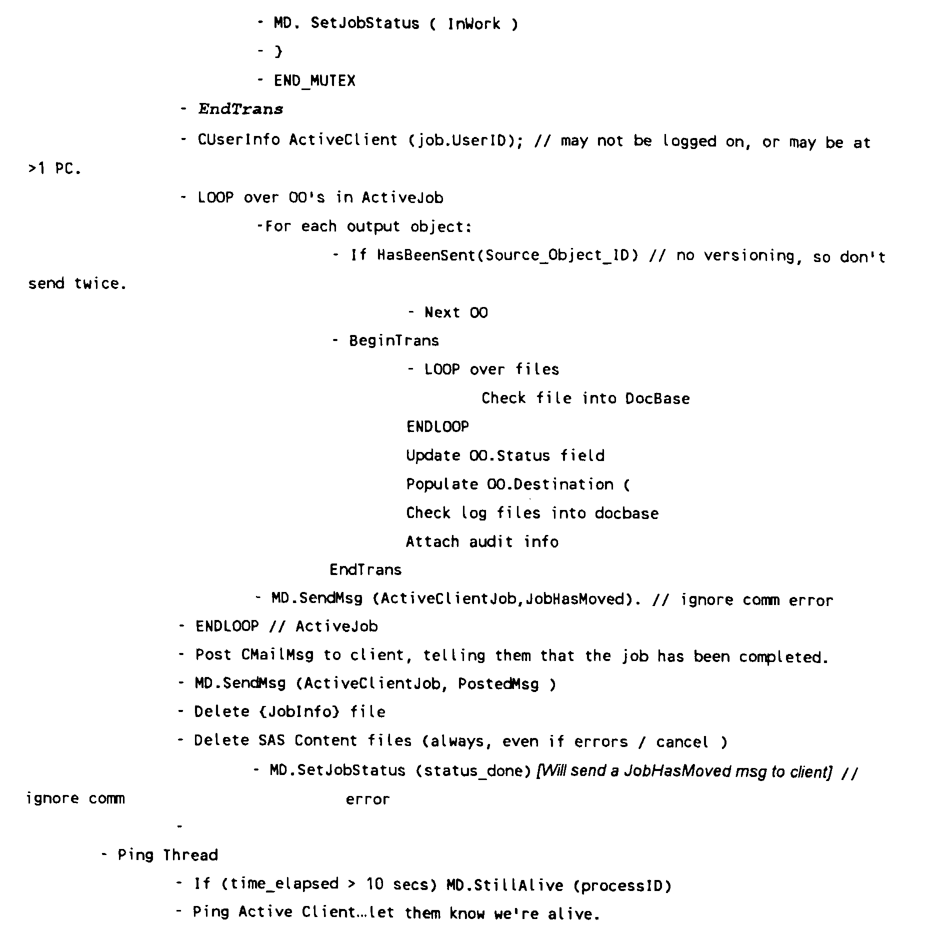

The following pseudocode represents an implementation of the client/server model without separating the client from the server. In other words, the pseudocode is written with a client and server in mind - and appropriately abstracted - however, they may reside in the same executable and may be run from the client PC. In one preferred embodiment, these object sets would be split apart.

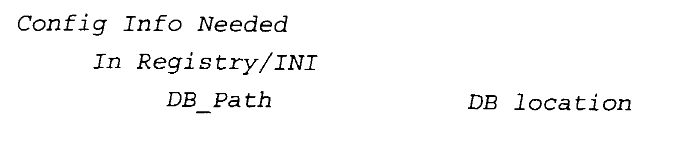

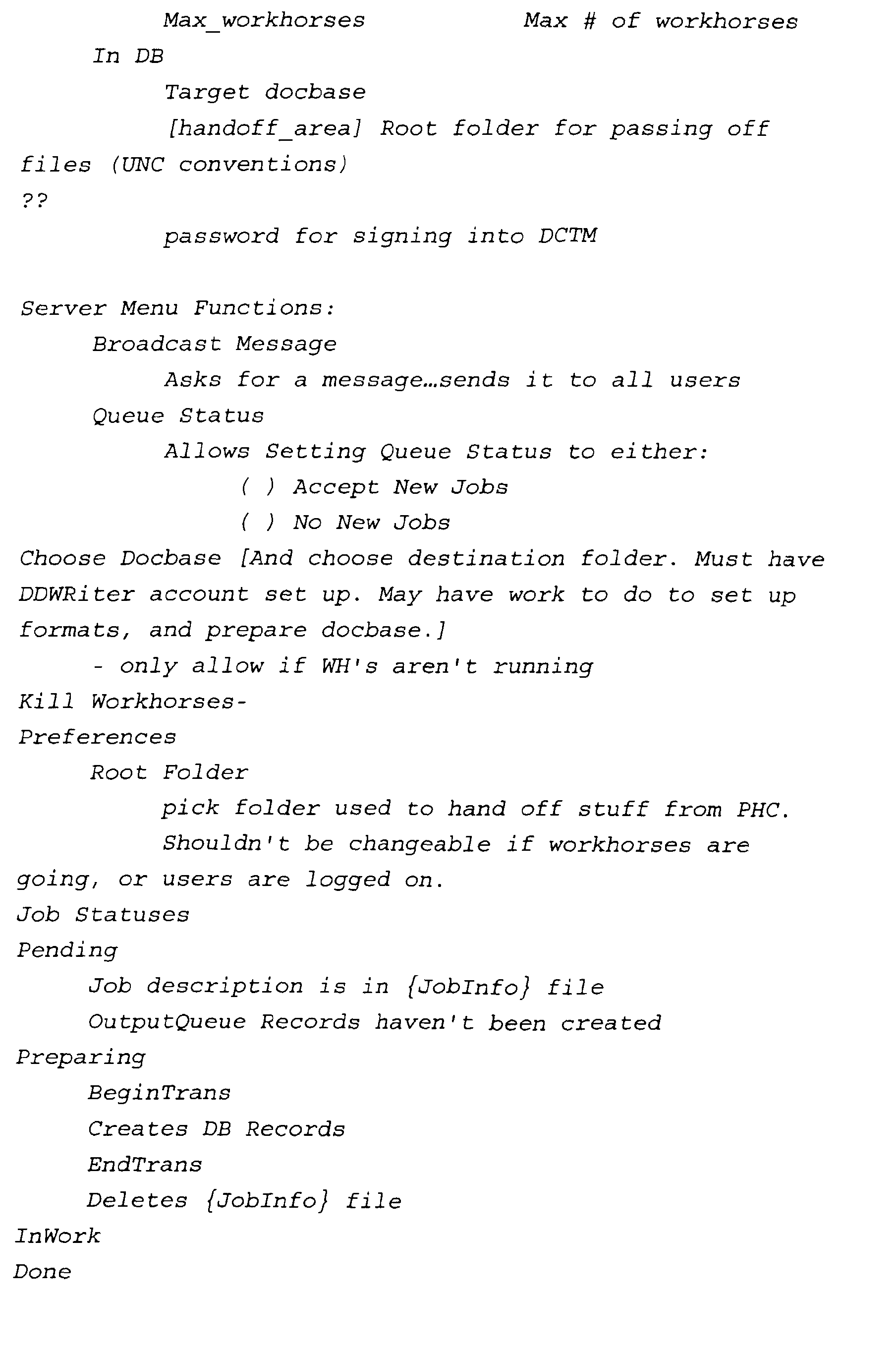

As previously described, the DD-Application Programming Interface (API) is responsible for communications external to the DD-Controller, enabling the integration between a plurality of independent software applications (e.g., data analysis software and document management software).

Also depicted in Figure 6 is a knowledge management block or level 120. Knowledge management level 120 includes DataDocket Knowledge Base (DD-KB) 122, a specialized database within the DataDocket Architecture that is designed to capture knowledge by storing information necessary to identify, "live" link, track, and record all transactions associated with business processes and work practices, as well as other functionality that might be enabled in a second or more advanced embodiment of the basic DataDocket system. Knowledge management level 120 also includes DataDocket Web-Based Knowledge Reporter (DD-KRPT) 124, a component that will preferably enable queries and reporting of information managed in the DataDocket KnowledgeBase via a web browser interface.

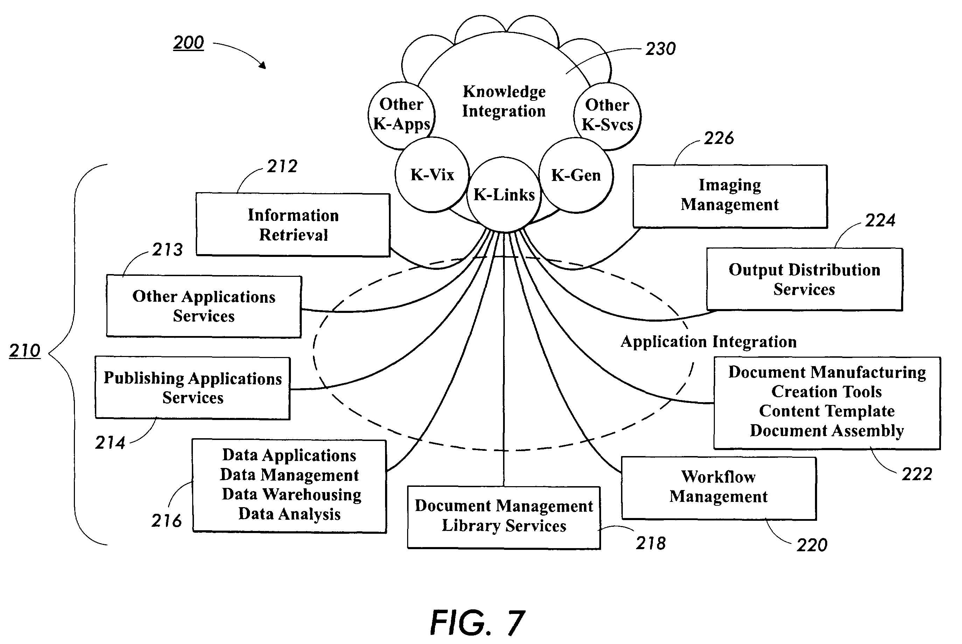

Turning next to Figure 7, depicted therein is a generalized three-dimensional view of a knowledge integration system 200. In particular, system 200 is able to integrate the operation of a series of information related applications 210, including: information retrieval 212, other applications/services 213, publishing applications and services 214, data applications (management, warehousing, analysis) 216, document management and library services 218, workflow management 220, document manufacturing creation tools (including content templates and document assembly) 222, output and distribution services 224, and imaging management 226. At a higher level, beyond that of integrating the various information related applications, the system integrates the knowledge contained in the respective applications, as represented by the knowledge integration sphere 230. Similarly, once the integrated knowledge is obtained, additional functionality, examples of which are generally characterized below, may be added to the system.

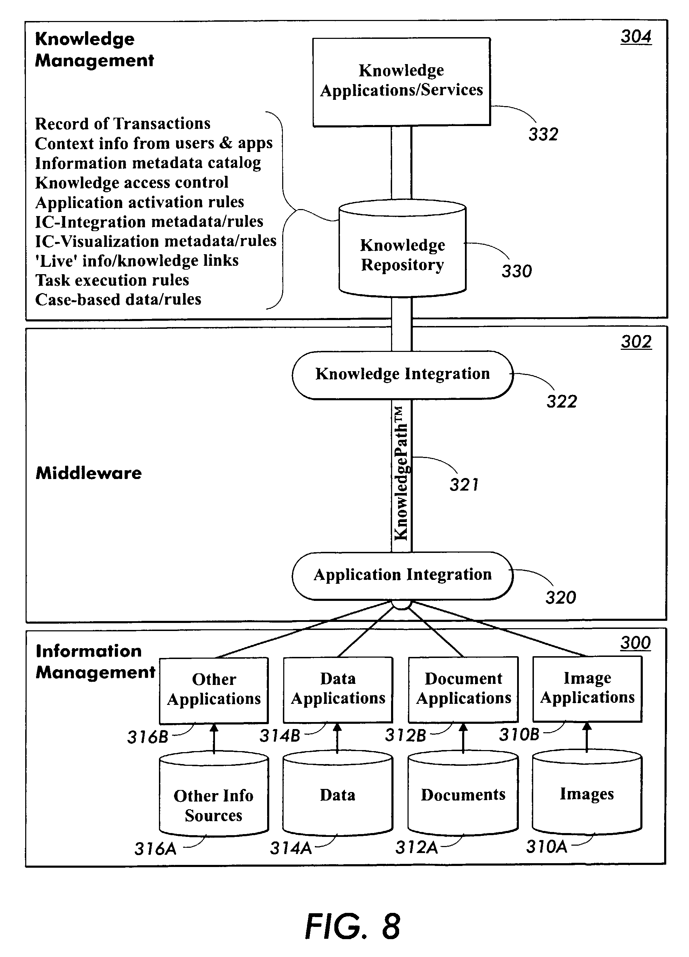

Referring also to Figure 8, illustrated is an upper level software architecture for the knowledge integration system 200 of Figure 7. In the architecture of Figure 8, the system has been divided into 3 distinct software levels
- information management 300, middleware 302 and knowledge management 304. Within information management level 300 reside the plurality of independent information management applications controlled by the DataDocket system, for example, image data and associated image applications (reference numerals 310A, 310B), documents and associated document applications (312A, 312B), statistical and/or analysis data and associated data processing and analysis applications (314A, 314B).

As previously described, the DataDocket system employs an API layer (not shown) to interface to and between these various information management applications in level 300. The API, and the DD-Controller component that controls the functionality of the API, are generally characterized as middleware 321- falling into level 302. The functionality enabled by the middleware 321, not only enables the integration of the functionality of the various information management applications (application integration, 320), but also provides added resources so as to monitor the flow of information into, out of, and amongst the various information management applications (knowledge integration, 322). The knowledge integration block 322, in turn, provides input and receives instructions from, the knowledge management level 304 via knowledge repository 330.

As inputs, the knowledge integration block supplies records of transactions, context information from users and applications, and information to populate an information metadata catalog in the knowledge repository 330. The knowledge applications/services are a potentially broad range of features that enable the efficient use and extraction of the integrated knowledge residing in the system. Features of the present invention are described in more detail as follows:

### 7. ReportCoordinator

Report Coordinator™ (RC) coordinates processes required to generate data reports from receiving raw datasheets, analyzing data, through hand-off to document production. RC organizes reports as a logical set of report elements (code, datasheets, logs, output), and registers statistical analysis data, report, code logs, external macros, code libraries. RC: identifies implicit dependencies between report elements (code, datasets, logs output, etc.); synchronizes data and document components created as part of data report generation processes; provides content-specific viewers for report elements (code, datasets, logs, output); manages dependencies between all components involved in report generation; and monitors data report component status. RC transfers data reports automatically and ad-hoc, via DataDocket, to EDMS; creates connections between analysis data reports and documents in EDMS; and identifies and facilitates required report updates. RC provides workgroup notification and receipt of data report transfers. Batch invocation is supported to register reports and optionally transfer reports to document production.

### 8. KnowledgeLink

The KnowledgeLink™ (K-Link)" embodiment embeds and executes "live" knowledge links stored in documents and analysis data. Users will be able to define and execute multiple tasks to be performed by one or more information management (data or document) applications from anywhere within the actual information content. More specifically, a knowledge link may be specified from within either a source document or published document, linking back to a related object in the data analysis system. Any source document links (defined at anchors within document content; i.e., at a specific place on a page) will be preserved when the document is published into a particular format (e.g., Adobe® PDF). The user would then have the ability to invoke a knowledge link, thereby accessing information within the knowledge repository and elicit a defined set of tasks that may initiate a set of transactions with assorted applications. KLink therefore maps relationships and dependencies between data and document components, at various levels of granularity, and enables capture and reuse of knowledge about data and documents relevant to a specific task.

### 9. KnowledgeViz

The KnowledgeViz™ (K-Viz) embodiment would enable a user to visualize objects and linkages maintained in the integration knowledge base, using a three dimensional interface and conceptual schema for access and manipulation of enterprise information wherever it is stored and managed. In particular, the knowledge visualization vehicle will provide a graphical front end to the knowledge management system described herein and enable the exploration, access, and use of knowledge via a user-specific taxonomy/classification hierarchy. For example, it may be employed to create a familiar regulatory environment, using a 3-D workspace, containing all of the data and information repositories (statistical data, documents, images, etc.), their buildings, people, regulatory submission objects/products, printers, etc. for simulation and real-time status of those objects and linkages between them. Examples of such visualization vehicles are currently described as product offerings from InXight, Inc., and include Hyperbolic Tree, Perspective Wall, Table Lens and Cone Tree.

### 10. KnowledgeGen

The KnowlegeGen™ (K-Gen) embodiment would generate knowledge documents used to manage the regulatory marketing application process. A rule-based approach would be used, enabling specification of hypotheses, assertions and explanations consisting of structured and unstructured data. In applications wherein the end result sought is regulatory approval, K-Gen defines and maintains an overall proof plan for securing approval.

The preferred embodiment would be an integrated system and framework for assisting "regulatory" knowledge workers who are responsible for making and supporting conclusions based on a complete and synchronized set of information sources. Implementation of such a framework necessarily includes tools that, as described above, provide: a mechanism to automatically build an integration knowledge base; augment an integration knowledge base based on user-specified linkages useful for processing information in support of analysis and decision making; graphically represent the integration knowledge base; and enable the construction of a regulatory proof (a logical argument based on assertions that support some hypotheses - the goal is to help clarify the "reasoning" used to reach the conclusion - and should be useful throughout the knowledge generation lifecycle by enabling identification of the existence or lack of supporting data, contradictory data, and facilitating exploration on the impact of new data).

A further enhancement to such a system could include a mechanism for identifying information with highest significance for evaluation, whereby automated "agents", under a knowledge worker's control, continuously review and scrutinize the integration knowledge base for trends, anomalies, linkages, etc. Such a system would enable a comparison of new data to previous information and arguments.

### 11. User interaction

The embodiments and functionality in the architecture described herein are preferably integrated to allow the knowledge worker to interact smoothly between tools so as not to impact the efficiency of the integrated analysis and decision making process. Vital to the design and implementation of the mechanisms specified in this architecture is the capturing of the "knowledge path" of all the work required as part of building the proof for filing a regulatory application. Ultimately, anyone reviewing the proof should be able to retrace all steps taken from the finished application, back to the generation of the arguments and assertions made during analysis, and finally back to the original data. Accordingly, the capturing of the context for all transactions supporting the decisions made is essential. Such functionality is likely to require recording a textual account of the transaction - such as a knowledge worker indicating "why" they are doing something. However, whenever possible, the recording of information should be done electronically, automatically, with dynamic (or "live") linkages to the source information and the system that manages such information. As an example, when related publications, managed by an electronic literature indexing and distribution system, are used as part of a particular decision process in support of some assertion, then the items referenced from this system should be uniquely identified, including how to retrieve them from the system. Also of importance is one of the primary goals of the system described herein - to enable knowledge workers to base their conclusions on a more complete set of information from all sources.

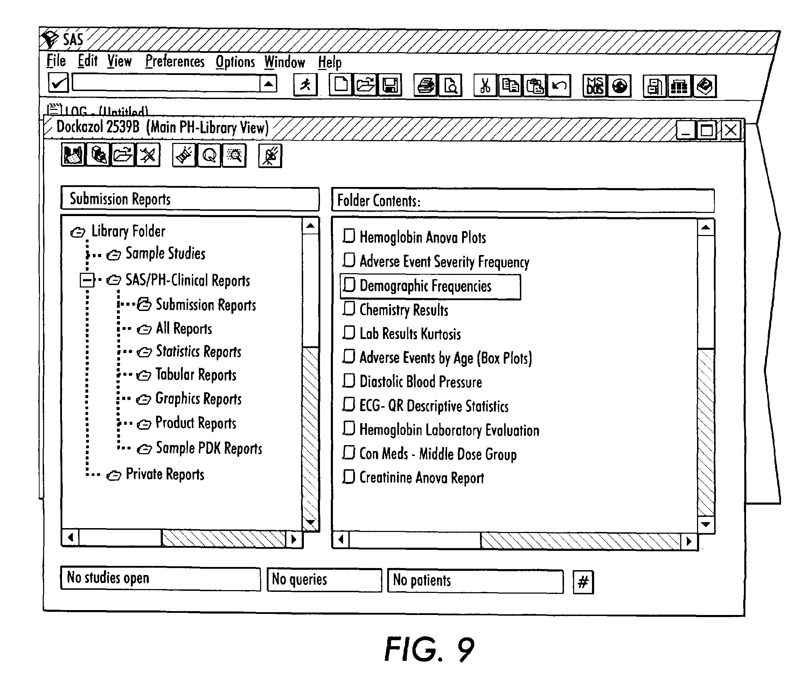

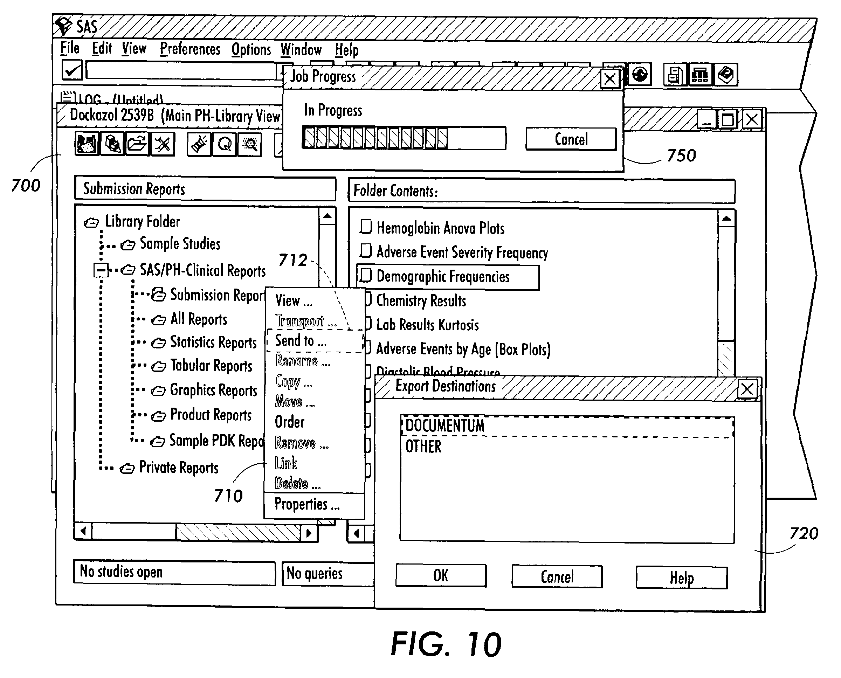

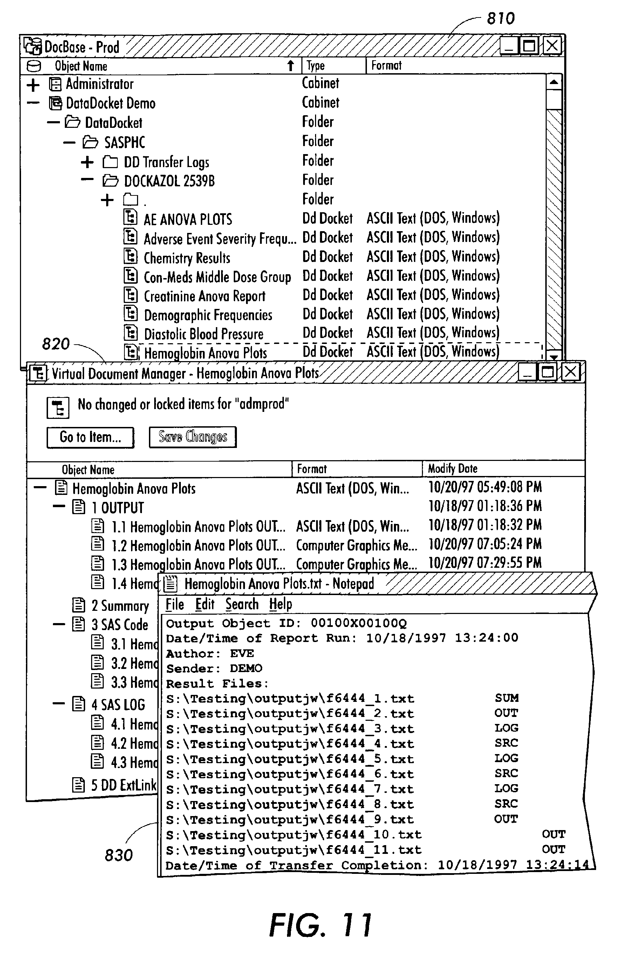

Referring next to the various illustrative user-interface screen representations found in Figure 9 through 20, a narrative description of various aspects of an embodiment of the DataDocket system will be presented. One embodiment of the present invention is the automated exportation of analysis output to an EDMS. Figure 9 is a representation of the user interface for an exemplary system employing SAS/PH-Clinical™ software for managing clinical data. In particular, the figure shows the folder structure of data and reports managed for an imaginary drug "Dockazol". Along the left column of the window are the various submission reports, and along the right column are the contents of a particular folder, all displayed in a MS-Windows® based environment as is proposed for the SAS/PH-Clinical software environment. The transfer of analysis data from the SAS/PH-Clinical database or repository (as illustrated in Figure 10) is initiated upon selection of the "Send to..." option displayed in pop-up window 710. Upon selection of the "Send to..." option 712, window 720 is opened to indicate the desired destination for the exported analytical data. Selection of the "Send to..." option invokes the DD-API as characterized above, to initiate the transfer. The transfer is monitored to ensure a successful transaction and progress is displayed via the bar chart in a progress box 750. Once completed, the information exported can be found in the Documentum™ workspace results illustrated in Figure 11, particularly the Virtual Document Manager folder, 820.

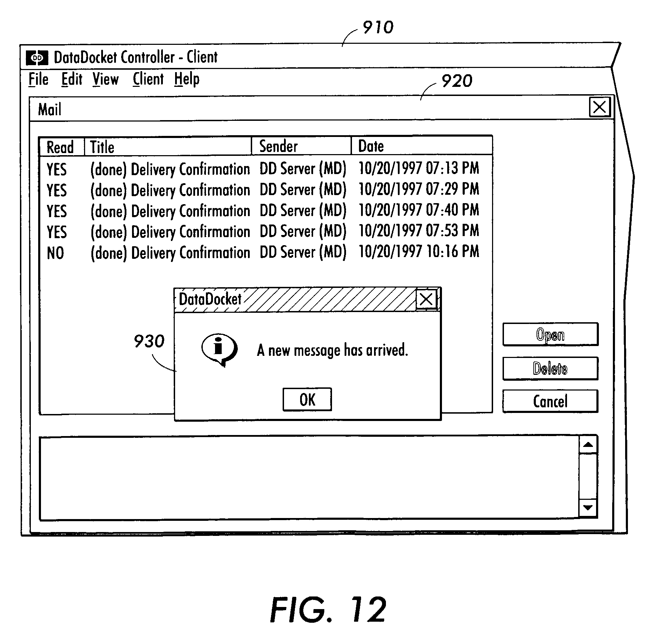

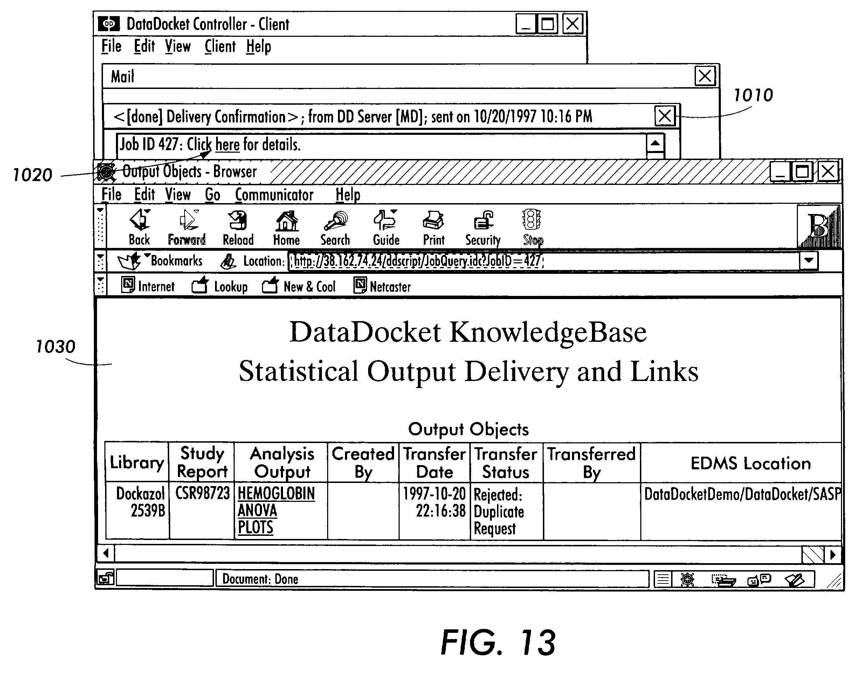

Another aspect of the present invention is the ability to trigger workflow events. For example, illustrated in Figure 12 is a DataDocket Controller status window 910, showing the status of mail in sub-window 920, and a notification window 930 that provides the user with an indication that an email transaction has completed. As represented in Figure 13, the user may also query the status of the job by selecting a link 1020 in confirmation window 1010. Once the link is selected by the user, browser window 1030 is opened to display the status of the transfer (e.g., completed).

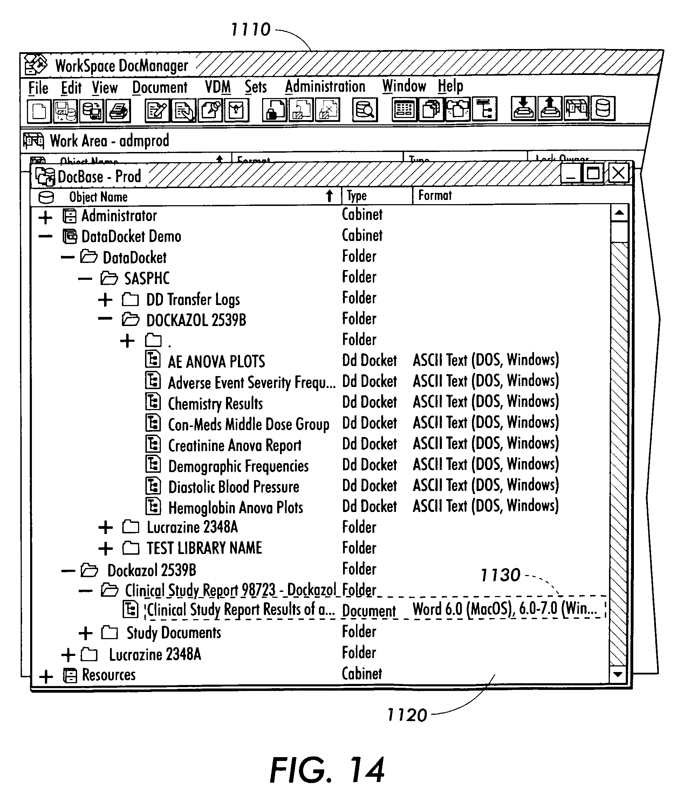

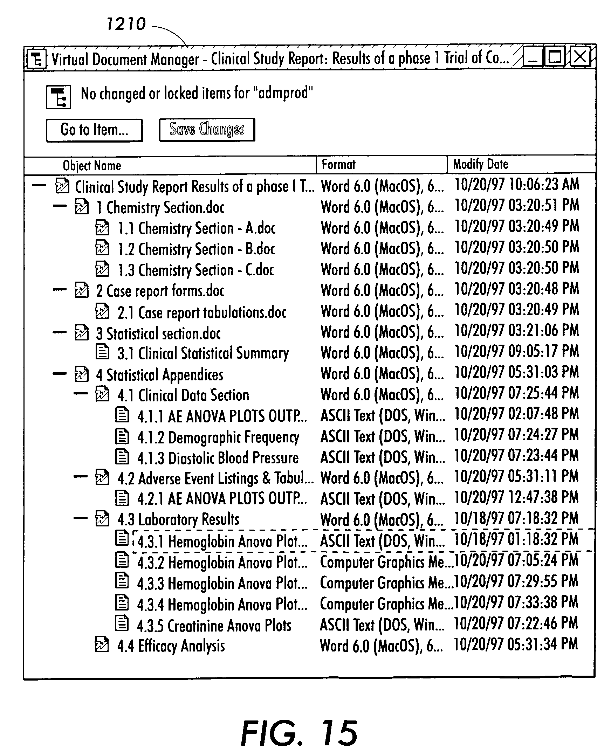

Referring next to Figure 14, displayed therein is a portion of the workspace document manager window 1110, showing within it the document database window 1120. As indicated by the highlighted text 1130, a user may use the analysis output to build reports. For example, selecting the highlighted entry results in the display of the Virtual Document Manager window 1210 in Figure 15.

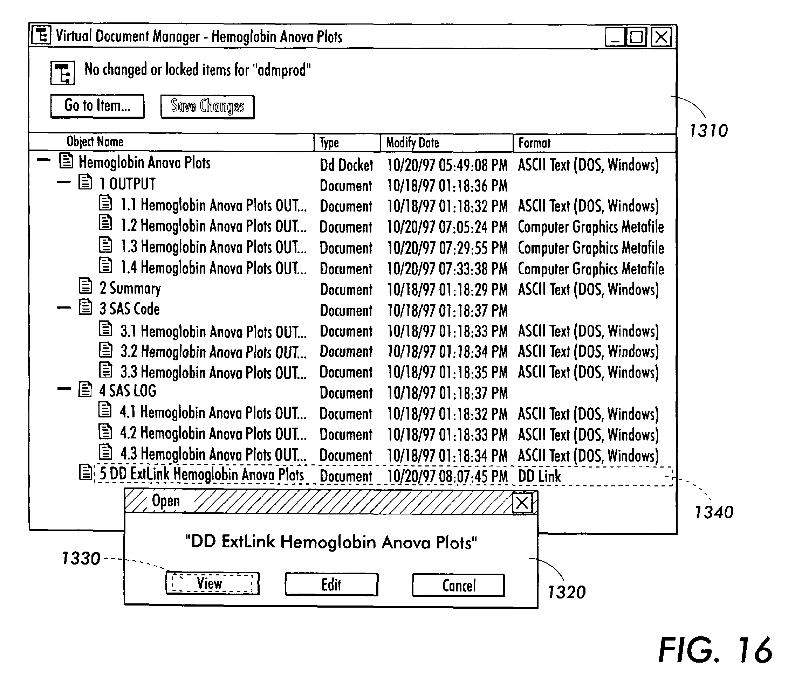

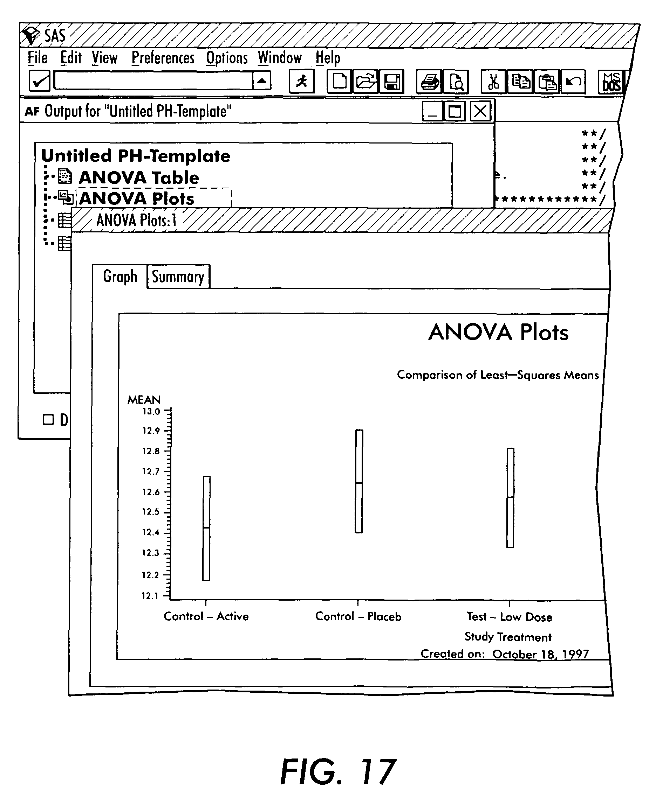

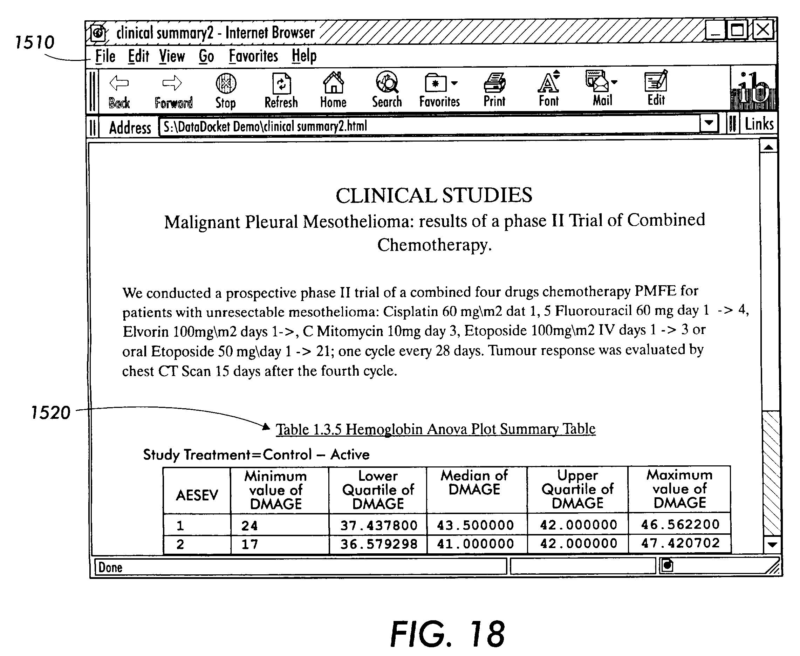

Another aspect of the present invention is the establishment of dynamic links from documents back to the data analysis system. For example, as illustrated by Figure 16, a user may, from the Documentum EDMS interface, drill down into the supporting source data. More specifically, a user may, by double-clicking to select the highlighted object 1340 in Virtual Document Manager window 1310, initiate the option of viewing the selected object. If the "view" button 1330 is selected in window 1320, the object is displayed by linking to the analysis database and invoking, in one embodiment, the SAS/PH-Clinical environment, where the Anova plots can be displayed as shown by Figure 17. Similar functionality can be enabled from a web-based environment through a browser window 1510 as illustrated in Figure 18. Moreover, certain of the references may include further links to other data, for example, the location 1520.

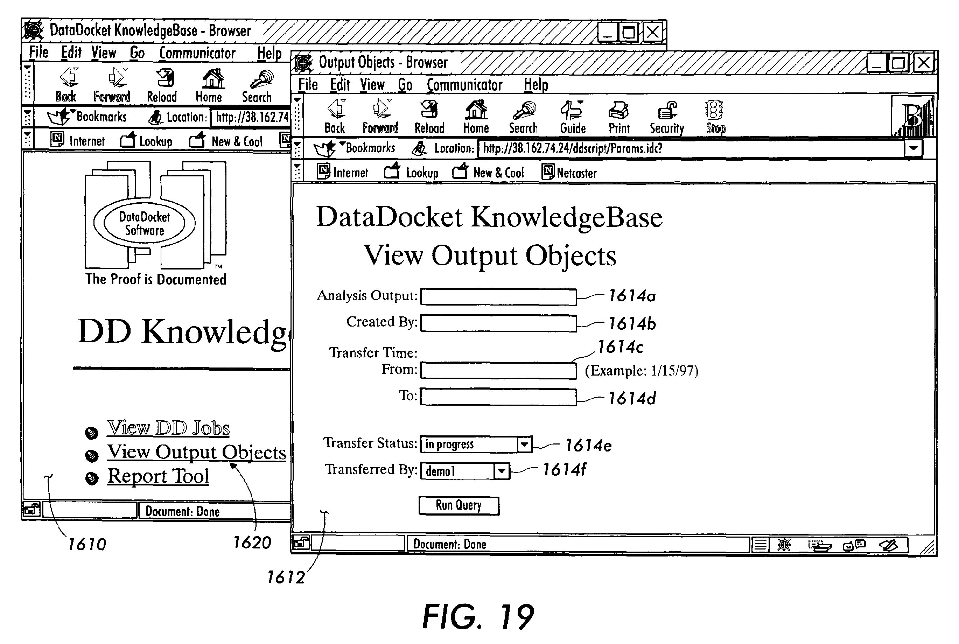

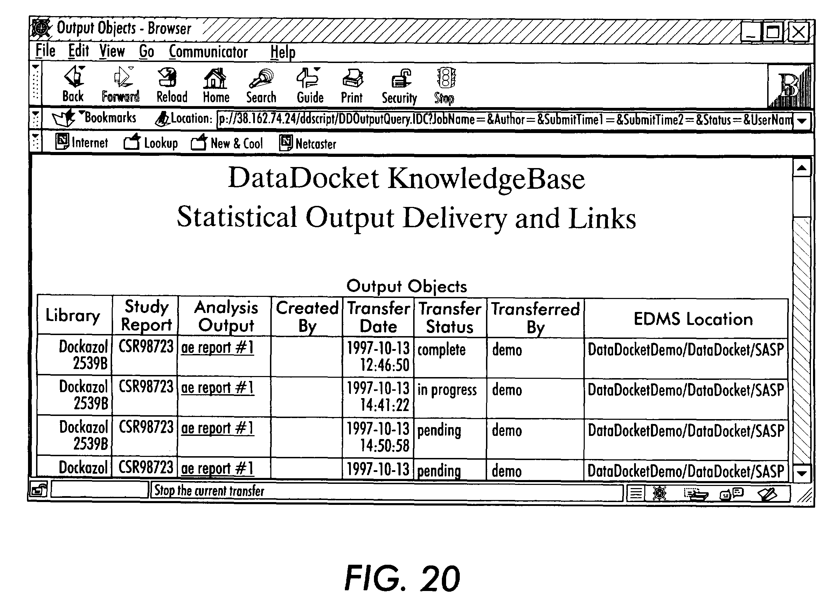

The recordation of context information or metadata in the knowledgebase is illustrated by Figures 19 and 20. In particular, Figure 19 illustrates a pair of windows 1610 and 1612. In browser window 1610, a user may select the "View Output Objects" link 1620 to invoke window 1612. Window 1612 enables a user to initiate a web-based query from his/her desktop to view those knowledgebase records having particular characteristics, for example, the name of the analysis output (text field 1614a); a specific author (field 1614b), or transfer status (pull-down field; 1614e). Referring to Figure 20, displayed therein is a representation of exemplary results that may be obtained in response to an Analysis Output search (e.g., search on "ae report #1").

In recapitulation, the present invention is a method and apparatus for first integrating the operation of various independent software applications directed to the management of information within an enterprise. The system architecture is, however, an expandable architecture, with built-in knowledge integration features that facilitate the monitoring of information flow into, out of, and between the integrated information management applications so as to assimilate knowledge information and facilitate the control of such information. Also included are additional tools which, using the knowledge information enable the more efficient use of the knowledge within an enterprise.

## Claims

1. A knowledge management and integration system, comprising:
a knowledge integration module for facilitating archiving of knowledge-related context related to documents and providing the ability to access and assess past, present and potential decisions, infrastructural setup, structuring processes, and practices;
an application integration module for providing application interoperability and synchronization between heterogeneous document and data sources; and
knowledge integration middleware for bridging structured and unstructured data, information and knowledge between said knowledge integration module and said application integration module.

2. The system of claim 1, further providing means of integrating knowledge with linkages for providing visualization and utilization of structured, unstructured and work practice data and metadata produced by knowledge workers in an enterprise.

3. The system of claim 1 or claim 2, wherein said knowledge integration middleware is employed to identify through tracking, monitoring, analysis the context in which information is employed so as to enable the use of such context in the management of knowledge capture and maintain audit trail dependencies between data analysis results in data analysis software and document components in document management software.

4. A document submission process control and tracking system for providing end-to-end control and tracking of documents from creation to final review, and which integrates with existing data analysis tools, authoring tools and document management systems, comprising:
a database;
means for capturing all process audit trail information in said database;
means for providing visualization of said audit trail information, and said process;
means for enabling definition and maintenance of an overall proof plan; and
means for automating construction of the submission document from said final proof plan.

5. The system of claim 4, further comprising an integration of components from five software categories:
data analysis client/server;
document management client/server;
document authoring client tools; and
application-to-application middleware.

6. A knowledge integration and management system, comprising:
a document repository for mediating data transfers between document authoring and document analysis modules;
a data analysis module comprising components for statistical data analysis and for pushing data analysis results to said document repository;
a document authoring module comprising components for document authoring, storage and retrieval, and for pulling data analysis results into said document repository; and
a process administration module comprising client components for creating and maintaining a proof plan, configuring a data analysis database and said document repository, and visualizing process status and audit trail information.
